Europäisches Patentamt

European Patent Office

Office européen des brevets

(19)

(11) Publication number: **0 330 424**
**A2**

# (12) EUROPEAN PATENT APPLICATION

(21) Application number: **89301665.9**

(22) Date of filing: **21.02.89**

(51) Int. Cl.⁴: **G 06 F 9/46**

(30) Priority: **23.02.88 US 159186**

(43) Date of publication of application:
**30.08.89 Bulletin 89/35**

(84) Designated Contracting States: **DE FR GB NL**

(71) Applicant: **DIGITAL EQUIPMENT CORPORATION**
**111 Powdermill Road**
**Maynard Massachusetts 01754-1418 (US)**

(72) Inventor: **Shubin, Hal**
**24 Randall Road**
**Maynard Massachusetts 01754 (US)**

**Dawson, Jeffrey L.**
**385 River Road**
**Carlisle Massachusetts 01741 (US)**

(74) Representative: **Goodman, Christopher et al**
**Eric Potter & Clarkson 14 Oxford Street**
**Nottingham NG1 5BP (GB)**

(54) Expert system for identifying performance limitations of processing operations of digital data processing system.

(57) An expert system for processing performance data indicative of the performance of a computer system. The expert system includes a plurality of investigation nodes arranged in an investigation tree arrangment having a root node and a plurality of leaf nodes. Each investigation node defines an investigation operation in connection with a performance aspect of a computer system as represented by an item of said performance data and includes pointers to at least two other investigation nodes in the investigation tree. A theshold list includes a plurality of threshold entries each identifying a threshold value. A control module iteratively processes investigation nodes in the investigation tree from said root node to a leaf node. at each investigation node performing the investigation operation in connection with an item of performance data and a threshold entry in said threshold list means. The control module selects each investigation node to be processed based on the pointers and the result of processing.

FIG. I

EXPERT SYSTEM 10

## Description

## EXPERT SYSTEM FOR IDENTIFYING PERFORMANCE LIMITATIONS OF PROCESSING OPERATIONS OF DIGITAL DATA PROCESSING SYSTEM

### Cross Reference to Related Document

Guide To VAX/VMS Performance Management, April, 1986 (Order Number AI-Y515B TE) published by Digital Equipment Corporation, Maynard, MA, assignee of the present application, which is incorporated herein by reference.

### Background of the Invention

#### 1. Field of the Invention

The invention relates generally to the field of digital data processing systems, and more specifically provides an expert system for use in determining possible sources of performance limitations of the digital data processing system in connection with its processing operations.

#### 2. Description of the Prior Art

A typical digital data processing (that is, computer) system includes three basic elements, namely a processor element, a memory element, and an input/output element. The memory element stores information in addressable storage locations. This information includes both data and instructions for processing the data. The processor element includes one or more digital data processing units, or "processors", each of which causes information to be transferred, or fetched, to it from the memory element, interprets the incoming information as either instructions or data, and processes the data in accordance with the instructions The results are then stored in addressed locations in the memory element

The input/output element also communicates with the memory element in order to transfer information into the system and to obtain the processed data from it. Typical units comprising the input/output element include, for example, printers, teletypewriters, and video display terminals, and may also include secondary information storage devices such as disk or tape storage units. Units comprising the input/output element normally operate in accordance with control information supplied to them by the processor element. The control information defines the operation to be performed by the input/output unit. At least one class of operations performed by an input/output unit is the transfer of information between the unit and the memory element.

Over the past several decades, computer systems have become ever more complex and sophisticated Originally, computers were large and expensive devices. operating in relative isolation and programmed and managed by highly trained personnel Generally, programs were run in "batch" mode, that is, the computer processed a single program from beginning to end, and then began processing the next program. Subsequently, computers were designed to permit interactive use, so that a user could input data into a program and have it processed while he was inputting more data. In addition, since computer systems were very expensive, computers were designed to be used by multiple users concurrently, generally in an interleaved fashion That is, the computer was designed to process portions of each program being run by various users

To simplify matters for the programmer, the operating system, which is a collection of programs that control the computer hardware, does program scheduling and so forth, for such a complex computer system relieves the applications programmer, who generates applications programs which actually provide useful processing for a user, of responsibility for managing the complexity. The operating system essentially permits the applications programmer to program as though his is the only program being run. The operating system performs all of the operations necessary to permit a number of applications programs to run concurrently.

A major problem in achieving concurrency is that the computer's memory may not be large enough to hold a large number of complete programs. Since for each program the computer only processes one instruction at a time on a few items of data, it need not maintain the entire program in memory to achieve acceptable processing rates. Instead, at any given time it only need maintain in memory those portions of the program, and data used thereby, which it is actually processing, and other portions of the program and data may be left on disk. The portion of the program and associated data which is in memory at any given time is called its "working set", and the amount of the memory which may be taken by a program is its "working set size".

As portions of a program which are not in memory may be required, they are brought into memory from the disk, which may necessitate returning other portions of the program to the disk, or overwriting them if they have not been modified. This operation is termed paging. This can permit a high degree of concurrency of processing, but since transfers to and from disk storage can be slow, it also can slow down program execution. Sometimes the sizes of the programs working sets are modified by the system manager or the operating systm to achieve a satisfactory rate of program execution, in some cases resulting in working sets of some programs being so large that other programs must be totally removed from memory to disk, which operation is termed swapping.

To achieve high and sustained system throughput, the operating system which manages the various system services permits a system manager to set a number of parameters which can adjust the operations of various system resources to ensure optimum operation of the system. One parameter relates to the amount of memory that should be allocated to a process, that is, the size of the process's "working set". If the size of the working set is increased, more program code and data may be permitted to reside in memory, but fewer programs may be permitted to reside in memory at the same time. on the other hand, if more programs are to reside in memory, the size of the working set of the various programs may need to be reduced, which may result in increased swapping. Other parameters may relate, for example, to disk caching, which may reduce transfers to and from mass storage devices. The caching is done in memory, and so increased caching can reduce the amount of memory available for users' programs, but reduce the rate of transfers to and from disk storage units.

Because of diverse workloads and types of operations which computer systems may be required to perform at different system installations the parameters which suffice for one installation may not also be satisfactory for others. Thus, while a system manufactorer may deliver a system to an installation with parameters which, by experience, may suffice for average workloads, a system manager may need to set the parameters to maximize performance for the uses at his particular installation. In addition, since the uses to which the computer system may be put may change over time, the system manager may need to periodically review the system performance and modify the parameters in view of the changed circumstances. Further, in many instances, reviews of the parameters may be used to determine when it is necessary to add or increase the capacity or speed of disk storage units or other input/output units, to increase the capacity of the memory, or even to increase the speed of the processor or processor in the computer system.

To assist in performing the performance evaluations, computer systems often include programs which permit the maintenance of substantial amounts of system accounting data relating to system operation. One such program is VAX Software Performance Monitor (Order No. QL850-01) provided by Digital Equipment Corporation, assignee of the present application. The data may be analyzed, as described in Guide to VAX/VMS Performance Management, published by Digital Equipment Corporation, April, 1986 (Order No. AI-Y515B-TE), to give guidance as to whether the system parameters need to be modified or whether additional system resources need to be provided to achieve acceptable system operation. The Guide contains an investigation tree that is made up of a number of nodes extending from a root node and going to one or more leaf nodes. Beginning with the root node, at each node, the system manager uses an item of performance data provided by the Software Performance Monitor, and steps to each successive node as determined by the performance data, until a leaf node is reached. The leaf node provides advice as to how to adjust the system operating parameters and/or modify resources to provide enhanced system performance.

## Summary of the Invention

The invention provides a new and improved expert system, in the form of a computer program, which processes system performance data detailing various operations of the system relating to system operation to facilitate adjustment of system operating parameters and/or modifications of system resources to provide enhanced system performance.

In brief summary, the new expert system processes performance data indicative of the performance of a computer system. The expert system includes a plurality of investigation nodes arranged in an investigation tree arrangement having a root node and a plurality of leaf nodes. Each investigation node defines an investigation operation in connection with a performance aspect of a computer system as represented by one or more items of the performance data and includes pointers to other investigation nodes in the investigation tree. A threshold list includes a plurality of threshold entries each identifying a threshold value. A control module iteratively processes investigation nodes in the investigation tree from said root node to a leaf node, at each investigation node performing the investigation operation in connection with items of performance data and theshold entries in the threshold list. The control module interatively selects each investigation node to be processed based on the pointers and the resulting of processing.

## Brief Description of the Drawings

This invention is pointed out with particularity in the appended claims. The above and further advantages of this invention may be better understood by referring to the following description taken in conjunction with the accompanying drawings, in which:

Fig. 1 is a functional block diagram of an expert system constructed in accordance with the invention;

Figs. 2A-1 through 2C are diagrams detailing data structures used in the expert system and depicted in Fig. 1; and

Figs. 3A and 3B are flow diagrams detailing the operations performed by the control module of the expert system depicted in Fig. 1.

## Detailed Description of an Illustrative Embodiment

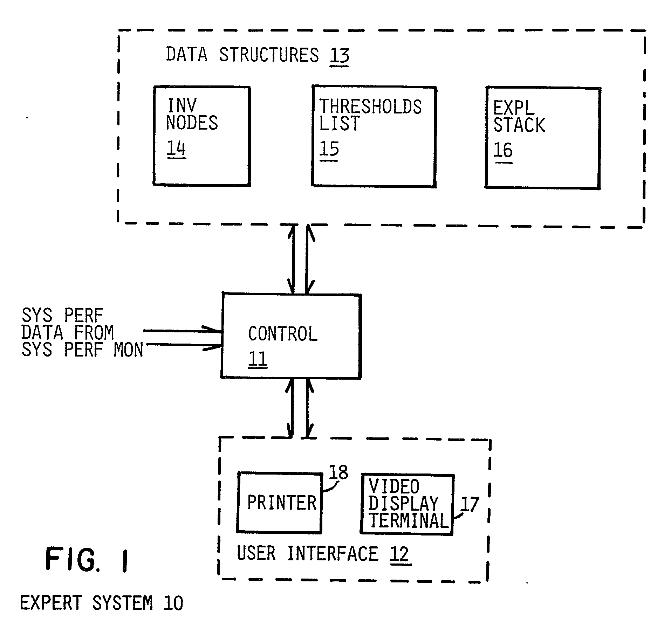

Fig. 1 depicts a functional block diagram of an expert system that analyzes performance data regarding the operations of a digital data processing system, or computer system, and provides recommendations as to adjusting system operating parameters and/or modifying of system resources to provide enhanced system performance. With reference to Fig. 1, the expert system 10 includes a control module 11 which, under control of commands from a user through a user interface 12 receives the system performance data from a system performance monitor (not shown). The control module 11 processes the performance data using a number of data structures 13, including investigation nodes generally identified by reference numeral 14 and threshold list 15. The control module 11 loads the results of each step of the processing onto an explanation stack 16, and, provides the results to the user interface 12

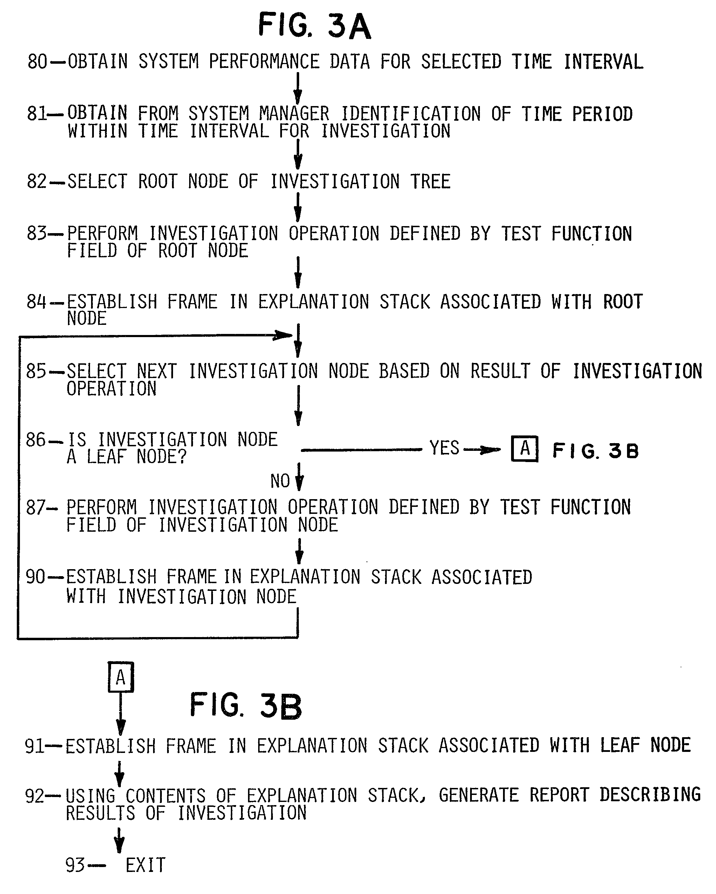

The user interface 12 permits a user, such as the system manager, to enable the expert system 10 to perform predetermined operations in response to commands entered at a video display terminal 17. The video display terminal transmits the commands to the control module 11, which processes them as described below in connection with Figs. 3A and 3B. The control module 11 transmits the results to the user interface 12 for display on the video display terminal or printing on a printer 18. It will be appreciated that the video display terminal 17 and printer 18 comprise two of many types of user interfaces which may be used in user interface 12. For example, commands for controlling the control module 11 may be provided by the operating system on a periodic or other basis. Alternatively, commands may be provided from any data input device, not necessarily a video display terminal. The user interface 12 need not include a printer 18.

The expert system 10 essentially performs three general sequential operations. First, the computer system is operated normally for a selected time interval to enable a System Performance Monitor, or other suitable program, to accumulate system performance data for processing by the expert system 10. The System Performance Monitor may collect a number of types of system performance data, each useful in determining the proper adjustment of a system parameter or the proper set of system resources which should be provided. In one embodiment, the System Performance Monitor collects the system performance data over a plurality of sequential time slots and associates each item of data with a time-stamp to identify the time slot from which the data was obtained.

The system manager determines which performance data is to be processed by the expert system 10. The control module 11 may, on receipt of a command therefor from the user interface 12, provide information as to the level of system activity during each time slot. The level of system activity may be a function of some or all of the types of system performance data collected by the System Performance Monitor. The control module 11 may transmit the information relating to the level of system activity to the user interface 12 for display to the system manager by means of, for example, a histogram representation showing the level of system activity during the various time slots represented by the system performance data.

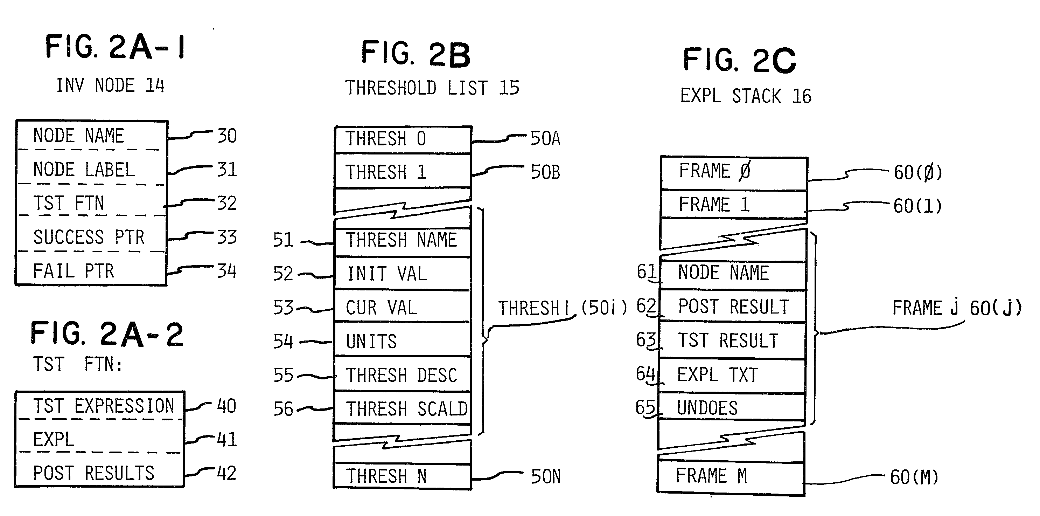

The system manager, through the user interface 12, provides the control module 11 with the identification of one or more time slots and transmits a command to enable the initiation of a performance investigation. In performing a performance investigation, the control module 11 uses the contents of the investigation nodes 14. Each investigation node 14 comprises a data structure described below in connection with Figs. 2A-1 and 2A-2. In one embodiment, the collection of investigation nodes 14 are organized into an investigation tree (not shown), which is a tree-like structure as described in the aforementioned Guide To VAX/VMS Performance Management. The investigation tree defined by the investigation nodes 14 begins with a root node and extends to one or more leaf nodes. Each investigation node 14, other than the leaf nodes, defines a test operation in connection with the system performance data from the system performance monitor and theshold information from the threshold list 15. The structure of the threshold list 15 is described below in connection with Fig. 2B.

Each investigation node 14, other than a leaf node, also includes pointers to two other investigation nodes 14, one to be used if the test operation is successful, and the other to be used if the test operation is a failure. The control module 11 proceeds from the root node of the investigation tree to a leaf node, iteratively performing the investigation test operation called for by each node which it encounters, with the path through the investigation tree depending on the results of the test operation at each investigation node 14. The leaf nodes of the investigation tree do not define tests, but instead define recommendations for adjustments to system operational parameters and/or modifications of system resources to achieve enhanced system operation. As it sequences through the investigation tree, the control module 11 loads the result of each test operation into a stack frame in the explanation stack 16, which is described below in connection with Fig. 2C.

After control module 11 determines that it has encountered a leaf node, on receipt of a command from the user interface 12, it prepares a report using the contents of the explanation stack 16. In the report, it essentially transmits the contents of the explanation stack 16 to the user interface 12. If the user interface 12 includes a printer 18, the report may be printed to provide a hard copy to the system manager Alternatively, the results may be displayed on the video display terminal 17 for viewing by the system manager.

The data structures 13 are depicted in Figs. 2A-1 through 2C. With reference to Fig. 2A-1, each investigation node 14 is a structure that includes five fields 30 through 34. A node name field 30 and a node label field 31 identify the investigation node 14. The contents of the node name field 30 and the success pointer 33 and fail pointer 34 identify the position of the investigation node 14 in the investigation tree. The node label field 31 contains a description of the test function represented by the node. The control module 11 uses the contents of the node label field 31 to identify the investigation node 14 when stepping through the investigation tree.

The investigation node 14 also includes a test function field 32. Briefly, the test function field 32 contains an investigation expression detailing the test operation represented by the investigation node 14. When the control module 11 performs the investigation test operation defined by the investigation node 14, it uses the investigation expression in the test function field 32, in conjunction with a threshold which it obtains from the threshold list 15. If the control module 11 determines that the result of the investigation test operation defined by the investigation node 14 is "success", it uses the contents of a success pointer field 33 to identify a next investigation node 14, if any, to be processed in the investigation tree. On the other hand, if the control module 11 determines that the result of the test is "fail", it uses the contents of a fail pointer field 34 to identify the next investigation node 14 to be processed. If the investigation node 14 is a leaf node, the success pointer field 3 and the fail pointer field 34 both contain a predetermined value, which, in one embodiment, is "NIL".

The test function field 32 includes a number of entries 40 through 42, which are depicted in detail in Fig. 2A-2. A test expression entry 40 contains the actual investigation expression represented by the investigation node 14. The investigation expression may be quite lengthy, depending on the nature of the investigation operation to be performed, and may refer to a threshold value in the threshold list 15. In one embodiment, test expression provides a test output which is a Boolean value of "SUCCESS" or "FAIL".

The test function field 32 also includes an explanation entry 41 that contains text templates used to generate explanations of the investigation operation enabled by the expression in test expression entry 40. The explanation entry 41 may contain several diverse alternative text templates which are selectively completed depending on the test output of the test expression. A post result slot 42 contains a post result flag which is copied into the investigation node's frame in the explanation stack 16. The condition of the post result flag indicates whether the node label field 31 of the investigation node 14 is to be shown in a summary portion of a report which is shown to the system manager.

As described above, the control module 11, when performing the investigation operation called for by an investigation node 14, uses a threshold value stored in the threshold list 15, which is depicted in detail in Fig. 2B. It will be appreciated that providing a threshold list 15 separate from the investigation nodes 14 will enable threshold values to be changed easily without having to access and modify the investigation nodes 14. With reference to Fig. 2B, the threshold list 15 comprises a plurality of threshold entries 50A through 50N (generally identified by reference numeral 50). The Fig. depicts the details of the structure of one threshold entry 50. A threshold entry 50 includes a number of fields 51 through 56. A threshold name field 51 contains a name for the threshold represented by the entry 50. An initial value field 52 contains one or more threshold values which are assigned to the threshold. In one embodiment, the threshold values may be scaled, that is, increased or decreased, based on the speed and capabilities of the processor and capacities of the disks, and the initial value field 52 contains the threshold values as scaled. If the threshold values are scaled, a threshold scaled flag 56 is set. The system manager may provide one or more threshold values for a threshold entry. If this occurs, the threshold values so provided are stored in a current value field 53. A units field 54 identifies the units of measurement represented by the threshold values in fields 52 and 53. Finally, a threshold description field 55 contains a textual description of the threshold represented by threshold entry 50.

As described above, as the control module 11 processes each investigation node 14, it loads the result of the investigation operation in an explanation stack frame 60(0) through 60(M) (generally identified by reference numeral 60) in explanation stack 16. Fig. 2C depicts the structure of explanation stack 16, including the details of an explanation stack frame 60. With reference to Fig. 2C, an explanation stack frame 60 includes five fields 61 through 65. A node name field 61 identifies the investigation node 14 whose processing gave rise to the stack frame 60. In addition, a post result field 62 contains a copy of the post result flag from the post result slot 44 in the test function field 32 of the investigation node 14 whose processing gave rise to the stack frame 60.

The explanation stack frame 60 also includes a test result field 63 contains the result of the investigation operation enabled by the investigation node 14 whose processing gave rise to the stack frame 60. An explanation text field 64 of the explanation stack frame 60 contains a textual explanation of the result of the investigation operation of the investigation node 14 whose processing gave rise to the explanation stack frame 60. In addition, in one embodiment the explanation text field 64 also includes the system performance data and thesholds used by the control module 11 in performing the investigation operation, and the location of the system performance data.

Finally, the explanation stack frame 60 includes an "undos" field 65. One embodiment of the expert system 10 enables the system manager to force the result of an investigation operation enabled by an investigation node 14 to the opposite result, and the "undos" field contains information used by the control module 11 to correct potential side effects of this.

With this background, a detailed description of the operations of the expert system 10, and particularly the control module 11, with be provided in connection with Figs. 3A and 3B. With reference to Fig 3A, the expert system 10 first obtains system performance data which will be used during a subsequent performance investigation (step 80). In one embodiment, the system performance data is obtained over a relatively long period of time, for example, one or several days, so that the computer system whose performance is being tested will be operated for one or more operational cycles. Since the operational load can be expected to vary considerably during a day, but from day to day at any given time during a day the operational load may be about the same, obtaining system performance data during a single day may suffice. However, if the operational load on a system changes substantially from day to day, it may be desirable to obtain system performance data over several days. Alternatively, it may be desirable to obtain system performance data during a shorter time period, less than a day, since longer time periods will require greater storage capacity for the system performance data. In that case, a time period will be selected which is representative of a heavy operational load on the computer system.

It will be appreciated that the system performance data that is collected may be of various types, each type relating to an element which pertains to system performance and which is used in the investigation operations for the various investigation nodes 14. For example, the system performacne data may relate to the number of instructions per unit time processed by the processor and the amount of idle time by the processor and the rate of processing applications programs and operating system programs. The information relating to instruction processing relates, in turn, to the amount of time the processor may stand idle waiting for other parts of the computer system to perform their operations, most notably the time required to obtain necessary instructions and data from the disk storage. In addition, the rate of processing applications programs versus operating system programs relates to the time the computer system spends in doing useful work (enabled by the applications programs) as opposed to doing scheduling, enabling disk transfer operations and performing similar operations. The system performance data may also relate to the rate of bringing instructions and data from disk into memory, which requires processor attention and also stops execution of an application program until they are loaded into memory, and swapping of data to disk. All of this, as well as other, information is useful in assessing the efficiency of the computer system in performing useful work in processing applications programs.

After the system performance data is collected in step 80, the expert system 10 obtains, from the system manager by way of the user interface 12, the identifcation of a time period for the subsequent performance investigation (step 81). To assist the system manager in determining a suitable time period, one embodiment provides a histogram detailing the operational load on the computer system over the time interval during which the system performance data was obtained. The histogram may represent a composite function of the types of system performance data which is collected in step 80.

After the system manager has selected a time period, the expert system 10, and specifically the control module 11, selects the root investigation node 14, that is, the first investigation node 14 in the investigation tree (step 82) and performs the investigation operation as defined by the test function field 32 of the investigation node 14 (step 83). As described above, if the investigation operation requires a threshold from the threshold list 15, the control module 11 uses the contents of a threshold entry 50 in performing the investigation operation. After performing the investigating operation (step 83), the control module 11 establishes an explanation stack frame 60 in the explanation stack 16 as described above (step 84).

Following step 84, the control module 11 uses the contents of the success pointer field 33 or fail pointer field 34 (Fig 2A-1) to identify a next investigation node 14 (step 85). The control module 11 next selects the success pointer field 33 or the fail pointer field 34 based on the result of the investigation operation which it performed in step 83. The control module 11 determines whether the identified investigation node 14 is a leaf node in the investigation tree (step 86) based on the contents of the node's success pointer field 33 and fail pointer field 34. If the control module 11 determines that the investigation node 14 is not a leaf node, it sequences to step 87, in which it performs the investigation operation defined by the test function field 32 in the investigation node 14, if necessary using a threshold entry 60 in the threshold list 15. The control module 11 then establishes an explanation stack frame 60 associated with the investigation node 14 in the explanation stack 16 (step 90) to hold the result and explanation of the investigation operation as described above. The control module 11 then returns to step 85 to select the next investigation node 14 based on the result of the investigation operation performed in step 87. The control module 11 iteratively performs steps 85, 86, 87 and 90, traversing through the investigation tree defined by the investigation nodes 14, until it encounters an investigation node 14 which is a leaf node.

At some point in traversing through the investigation tree, in step 86 the control module 11 will encounter an investigation node 14 which is a leaf node, that is, an investigation node 14 the contents of whose success pointer field 33 and fail pointer field 34 are both "NIL". The investigation node 14 for a leaf node does not define an investigation operation in the test function, but instead it contains, in the explanation slot 45, recommendations for the adjustments of operational parameters or system resources. When a leaf note is encountered, control module 11 sequences to step 91 in which it establishes an explanation stack frame 60 for inclusion in the explanation stack 16 in which it stores the contents of the explanation slot 45.

Following step 91, the control module 11 sequences to step 92, in which it generates a report, using the contents of the explanation stack 16 and transmits the report to the user interface 12 for presentation to the system manager. The control module 11 includes in the report only the contents of the explanation stack frames 60 along with a summary of the explanation stack frames 60 whose post results flags 62 are set, as described above.

In one specific embodiment, which is described in the aforementioned Guide To VAX/VMS Performance Management, the investigation tree is divided into a plurality of sub-trees, each of which also has a root node. In that embodiment, the root nodes do not enable investigation operations, but instead essentially operate as pointers to an investigation node 14 which does enable an investigation operation. An investigation node 14 operates as a root node to the entire investigation tree.

The foregoing description has been limited to a specific embodiment of this invention. It will be apparent, however, that variations and modifications may be made to the invention, with the attainment of some or all of the advantages of the invention. Therefore, it is the object of the appended claims to cover all such variations and modifications as come within the true spirit and scope of the invention.

**Claims**

1. An expert system for processing performance data indicative of the performance of computer system, said expert system comprising:

A. investigation node means comprising a plurality of investigation nodes arranged in an investigation tree arrangement having a root node and a plurality of leaf nodes, each investigation node defining an investigation operation in connection with a performance aspect of a computer system as represented by an item of said performance data and including pointers to at least two other invstigation nodes;

B. threshold list means including a plurality of threshold entries each identifying a threshold value; and

C. control means including iterative processing means for iteratively processing investigation nodes in said investigation tree from said root node to a leaf node, at each investigation node performing the investigation operation in connection with an item of performance data and a threshold entry in said threshold list means, said iterative processing means selecting each investigation node to be processed based on the pointers and the result of processing.

2. An expert system as defined in claim 1 further comprising explanation stack means, said control means further including stack frame means responsive to the processing operation in connection with each investigation node during an iteration for establishing a stack frame in said explanation stack means for storing the result of the investigation operation.

3. An expert system as defined in claim 2 wherein each investigation node further includes explanation entry means for storing an explanation identifying the result of the investigation operation, the stack frame means using the contents of said explanation entry means in establishing said stack frame.

4. An expert system as defined in claim 2 wherein said iterative processing means further includes means for determining whether an investigation node is a leaf node, said control means further includes report means responsive to said iterative processing means determining that an investigation node is a leaf node for generating a report in response to the contents of said explanation stack means.

DATA STRUCTURES 13

INV NODES 14

THRESHOLDS LIST 15

EXPL STACK 16

SYS PERF DATA FROM SYS PERF MON

CONTROL 11

PRINTER 18

VIDEO DISPLAY TERMINAL 17

USER INTERFACE 12

EXPERT SYSTEM 10

FIG. I

## FIG. 2A-1

INV NODE 14

| | |
|---|---|
| NODE NAME | ~30 |
| NODE LABEL | ~31 |
| TST FTN | ~32 |
| SUCCESS PTR | ~33 |
| FAIL PTR | ~34 |

## FIG. 2A-2

TST FTN:

| | |
|---|---|
| TST EXPRESSION | ~40 |
| EXPL | ~41 |
| POST RESULTS | ~42 |

## FIG. 2B

THRESHOLD LIST 15

| | |
|---|---|
| THRESH 0 | ~50A |
| THRESH 1 | ~50B |

| | | |
|---|---|---|
| 51 | THRESH NAME | |
| 52 | INIT VAL | |
| 53 | CUR VAL | THRESH i (50i) |
| 54 | UNITS | |
| 55 | THRESH DESC | |
| 56 | THRESH SCALD | |

| | |
|---|---|
| THRESH N | ~50N |

## FIG. 2C

EXPL STACK 16

| | |
|---|---|
| FRAME Ø | ~60(Ø) |
| FRAME 1 | ~60(1) |

| | | |
|---|---|---|
| 61 | NODE NAME | |
| 62 | POST RESULT | FRAME j 60(j) |
| 63 | TST RESULT | |
| 64 | EXPL TXT | |
| 65 | UNDOES | |

| | |
|---|---|
| FRAME M | ~60(M) |

EP 0 330 424 A2

# FIG. 3A

80—OBTAIN SYSTEM PERFORMANCE DATA FOR SELECTED TIME INTERVAL

81—OBTAIN FROM SYSTEM MANAGER IDENTIFICATION OF TIME PERIOD WITHIN TIME INTERVAL FOR INVESTIGATION

82—SELECT ROOT NODE OF INVESTIGATION TREE

83—PERFORM INVESTIGATION OPERATION DEFINED BY TEST FUNCTION FIELD OF ROOT NODE

84—ESTABLISH FRAME IN EXPLANATION STACK ASSOCIATED WITH ROOT NODE

85—SELECT NEXT INVESTIGATION NODE BASED ON RESULT OF INVESTIGATION OPERATION

86—IS INVESTIGATION NODE A LEAF NODE? ——— YES ——➤ 〔A〕 FIG. 3B

NO ↓

87— PERFORM INVESTIGATION OPERATION DEFINED BY TEST FUNCTION FIELD OF INVESTIGATION NODE

90—ESTABLISH FRAME IN EXPLANATION STACK ASSOCIATED WITH INVESTIGATION NODE

〔A〕

# FIG. 3B

91—ESTABLISH FRAME IN EXPLANATION STACK ASSOCIATED WITH LEAF NODE

92—USING CONTENTS OF EXPLANATION STACK, GENERATE REPORT DESCRIBING RESULTS OF INVESTIGATION

93— EXIT